# EUROPEAN PATENT APPLICATION

(11) **EP 4 485 041 A1**
(43) Date of publication of application: **01.01.2025**
(21) Application number: 24182842.5
(22) Date of filing: 18.06.2024
(51) Int. Cl.: G02B 27/00, G02C 7/08

(54) **OPTICAL ADJUSTMENT IN ADAPTIVE LENSES DURING EYE BLINKS**

(30) Priority: 28.06.2023 US 202318343054
(71) Applicant: Pixieray Oy, 02630 Espoo (FI)
(72) Inventor: Miettinen, Ville, 00100 Helsinki (FI); Kataja, Mikko, 00100 Helsinki (FI); Melakari, Klaus, 02140 Espoo (FI)
(74) Representative: Moosedog Oy

(57) **Abstract**

Disclosed is an optical apparatus (100, 300) comprising: eye-tracking means (102, 302); an active optical element (104A-B, 200, 304A-B) per eye; controlling means (106, 306A-B) for controlling one or more optical parameter of the active optical element; and processor(s) (108, 308). The processor(s) is/are configured to: detect a trigger for changing at least one of the one or more optical parameters of the active optical element; process eye-tracking data, collected by the eye-tracking means, to detect a beginning of an eye blink of a user; and drive the controlling means to change the at least one of the one or more optical parameters of the active optical element during the eye blink.

## Description

### TECHNICAL FIELD

The present disclosure relates to optical apparatuses incorporating optical adjustment in adaptive lenses during eye blinks. The present disclosure also relates to methods incorporating optical adjustment in adaptive lenses during eye blinks.

### BACKGROUND

Nowadays, adaptive lenses are increasingly being used in eyewear apparatuses for correcting vision related problems (for example, such as age-related vision degradation in humans. Typically, as a person ages, a biological lens of her/his eye gradually loses some of its flexibility, which results in a gradual decline in an auto-focusing ability of the eye. Furthermore, the eye itself may be prone to straining, which results in issues such as soreness, tiredness, irritation, and the like, in the eye. Therefore, blurred vision, difficulty in focusing on objects at different distances, and eye straining are common issues faced by people. In this regard, the adaptive lenses are capable of adjusting their optical characteristics, as required.

Presently, the optical characteristics of the adaptive lenses are dynamically adjusted when a user is wearing an eyewear apparatus having the adaptive lenses. However, such adjustment takes some time to fully take place and be in effect. For example, such adjustment can take several hundreds of milliseconds (such as 100ms, 150ms, 200ms, or similar) to take place. This adjustment is noticeable (i.e., perceivable) to the user, thereby adversely impacting a viewing experience of the user. Furthermore, depending on a magnitude of the adjustment of the optical characteristics, such an adjustment can be quite visually distracting to the user.

Therefore, in light of the foregoing discussion, there exists a need to overcome the aforementioned drawbacks.

### SUMMARY

The present disclosure seeks to provide an optical apparatus and a method in which at least one optical parameter of an adaptive lens is changed effectively, without being noticeable to a user. The aim of the present disclosure is achieved by an optical apparatus and a method which incorporate optical adjustment in adaptive lenses during eye blinks as defined in the appended independent claims to which reference is made to. Advantageous features are set out in the appended dependent claims.

Embodiments of the present disclosure substantially eliminate or at least partially address the aforementioned problems in the prior art, and facilitate effectively changing at least one optical parameter of an adaptive lens during an eye blink, so that said change is imperceptible to the user, thereby providing a smooth, adaptive viewing experience to the user.

Throughout the description and claims of this specification, the words *"comprise", "include", "have",* and *"contain"* and variations of these words, for example *"comprising"* and *"comprises",* mean *"including but not limited to",* and do not exclude other components, items, integers or steps not explicitly disclosed also to be present. Moreover, the singular encompasses the plural unless the context otherwise requires. In particular, where the indefinite article is used, the specification is to be understood as contemplating plurality as well as singularity, unless the context requires otherwise.

### BRIEF DESCRIPTION OF THE DRAWINGS

FIG. 1 is a block diagram of an optical apparatus, in accordance with an embodiment of the present disclosure;
FIGs. 2A and 2B are schematic illustrations of an active optical element, in accordance with different embodiments of the present disclosure;
FIG. 3 is a schematic illustration of an optical apparatus, in accordance with an embodiment of the present disclosure; and
FIG. 4 is a flowchart illustrating steps of a method incorporating optical adjustment in adaptive lenses during eye blinks, in accordance with an embodiment of the present disclosure.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In a first aspect, an embodiment of the present disclosure provides an optical apparatus comprising:
eye-tracking means;
an active optical element per eye;
controlling means for controlling one or more optical parameters of the active optical element; and
at least one processor configured to:
   detect a trigger for changing at least one of the one or more optical parameters of the active optical element;
   process eye-tracking data, collected by the eye-tracking means, to detect a beginning of an eye blink of a user; and
   drive the controlling means to change the at least one of the one or more optical parameters of the active optical element during the eye blink.

In a second aspect, an embodiment of the present disclosure provides a method comprising:
detecting a trigger for changing at least one of one or more optical parameters of an active optical element;
processing eye-tracking data, collected by an eye-tracking means, to detect a beginning of an eye blink of a user; and
driving controlling means for changing the at least one of the one or more optical parameters of the active optical element during the eye blink.

The present disclosure provides the aforementioned optical apparatus and the aforementioned method. Pursuant to embodiments of the present disclosure, the optical apparatus is configured to change at least one of the one or more optical parameters of the active optical element during an eye blink, as said change will then be imperceptible to the user, thereby providing a seamless viewing experience. The optical apparatus and the method derive technical benefits based on a fact that waiting for a next eye blink to perform an optical adjustment in the active optical element (namely, changing the at least one of the one or more optical parameters) would not adversely impact the viewing experience of the user, as eye blinks usually occur very frequently (i.e., in every 3-4 seconds). Moreover, each eye blink takes approximately 100 to 400 milliseconds (with an average of approximately 250 ms as per experiments conducted by the inventors). Said change can be performed fully within the time duration of the eye blink; that is, this time duration is sufficient to make the change in the at least one of the one or more optical parameters. Furthermore, the eye blinks can be easily detected using the eye-tracking means, which can be implemented with ease and is inexpensive. Additionally, the optical apparatus and the method enable the user to change the at least one of the one or more optical parameter of the active optical element as per her/his requirement, by voluntarily blinking her/his eyes. Beneficially, the active optical element is optically efficient and dynamically controllable, while having low power requirements. The active optical element can easily be implemented in various types of optical apparatuses, for example, such as a pair of glasses, a pair of sunglasses, smart glasses, a head-mounted display, or similar. The method described herein is simple, robust, fast, reliable, and easy to implement.

Throughout the present disclosure, the term *"optical apparatus"* refers to an apparatus that is to be worn over the eyes of the user. Examples of the optical apparatus include, but are not limited to, a pair of glasses, a pair of sunglasses, smart glasses, and a head-mounted display.

Throughout the present disclosure, the term *"eye-tracking means"* refers to a specialized equipment that is employed to detect at least a beginning of an eye blink of the user. The term *"eye blink"* refers to a state of temporary closure of the eye of the user. The eye-tracking data comprises eye-tracking values that are related to and are indicative of a blinking state of the eye and/or a non-blinking state of the eye. The blinking state of the eye encompasses the beginning of the eye blink, the duration of the eye blink, and an ending of the eye blink. The eye-tracking data corresponding to each of these stages of the blinking state of the eye is different and distinctive from each other. Herein, the eye-tracking data may include the images of the user's eyes, and the beginning of the eye blink may be detected when certain features (for example, such as portions of corneas lying above pupils) of the user's eyes, start to become invisible (for example, be only partially visible) in the images of the user's eyes.

Optionally, when processing the eye-tracking data, the at least one processor is configured to employ at least one of: an image processing algorithm, a feature extraction algorithm, a data processing algorithm. Other suitable algorithm(s) can also be employed, depending on a type of the eye-tracking data. A technical effect of processing the eye-tracking data to detect the beginning of the eye blink of the user is that the change of the at least one of the one or more optical parameters is initiated in a timely manner, thereby allowing for implementation of the change during the eye blink in a visually imperceptible manner.

It will be appreciated that the eye-tracking means can also be employed to detect and/or follow a direction of gaze of the user of the optical apparatus. Such eye-tracking is performed when the optical apparatus, in operation, is worn by the user. Optionally, in this regard, the eye-tracking means is implemented by way of at least one of: contact lenses having sensors, cameras monitoring features of the user's eyes, light sensors detecting light reflecting off a surface of the user's eyes. Such features may comprise at least one of: a shape of a pupil of the user's eye, a size of the pupil, corneal reflections of light emanating from a real-world environment from a surface of the user's eye, a relative position of the pupil with respect to the corneal reflections, a relative position of the pupil with respect to corners of the user's eye. Such eye-tracking means are well-known in the art.

The eye-tracking means is configured to collect the eye-tracking data and send the eye-tracking data to the at least one processor. It will be appreciated that the eye-tracking data is collected repeatedly by the eye-tracking means throughout an operation of the optical apparatus. An up-to-date eye-tracking data allows for dynamically controlling the active optical element of the optical apparatus in an accurate manner. In an instance, when the eye-tracking means is implemented as the camera, the eye-tracking data is in form of images of the user's eyes. In another instance, when the eye-tracking means is implemented by way of contact lenses having sensors, the eye-tracking data is sensor data collected from the sensors. In yet another instance, when the eye-tracking means is implemented by way of light sensors, the eye-tracking data comprises light signals detected by the light sensors.

Throughout the present disclosure, the term *"active optical element"* refers to an optical element having one or more optical parameters that can be controlled. In other words, the one or more optical parameters of the active optical element are actively (i.e., dynamically) adjustable.

Optionally, the one or more optical parameters of the active optical element comprise at least one of: at least one optical power to be produced, a position of at least one region of the active optical element in which the at least one optical power is to be produced, a shape of the at least one region, an optical centre of the at least one region, a shape of the active optical element, a profile of the active optical element, a transparency of at least a portion of the active optical element, a blur of at least a portion of the active optical element, a colour of the active optical element, whether an astigmatism correction mode of the active optical element is switched on or off, whether a prismatic correction mode of the active optical element is switched on or off. Other optical parameters besides the aforementioned examples may also be feasible to be controlled pursuant to embodiments of the present disclosure. Each of the aforementioned examples of optical parameters are described in detail below.

In some implementations, the at least one optical power to be produced comprises a single optical power. In other implementations, the at least one optical power to be produced comprises a plurality of optical powers. It will be appreciated that the plurality of optical powers could be produced in different regions of the active optical element at a same time, for example, for enabling the user to focus on distant objects (using a negative optical power or a zero optical power, depending on the user's need) and to focus on near objects (using a zero optical power or a positive optical power, depending on the user's need). Optionally, in this regard, the at least one optical power is at least one of: the positive optical power, the negative optical power, the zero optical power. Herein, the positive optical power is used for reading or focussing on nearby objects, when the user has hypermetropia or presbyopia. The negative optical power is used for distance viewing, when the user has myopia. The zero optical power may be used when the user does not have myopia and needs to focus on distant objects, or when the user does not have hypermetropia or presbyopia and needs to focus on nearby objects.

Optionally, the active optical element comprises at least one region in which the at least one optical power is to be produced. As a first example, the at least one region of the active optical element may comprise a central region and a peripheral region surrounding the central region. The central region may be in a form of a single portion having a first adjustable optical power, wherein the first adjustable optical power may be one of: a zero optical power, a negative optical power (depending on the user's need). In some cases, the peripheral region may have a plurality of portions having adjustable optical powers, wherein the optical power of a given portion of the peripheral region is to be selectively adjusted to produce a given optical power. The plurality of portions may be sparsely arranged in the peripheral region to cover different portions of the peripheral region. In some other cases, the peripheral region may also be in a form of a single portion that is continuous. In such a case, a given part of the single portion could be selectively controlled to produce a given optical power at the given part of the single portion. As an example, when the first adjustable optical power is the zero optical power, the given optical power could be a positive optical power. As another example, when a user is looking through, for example, a left portion of the peripheral region, the optical power may be required to be produced only on the left portion.

Furthermore, the active optical element may also comprise an intermediate region between the central region and the peripheral region, wherein the intermediate region has an intermediate optical power that lies in between the first adjustable optical power and an optical power of the peripheral region. This enables in providing a smooth transition of optical powers in the active optical element.

Optionally, the position of at least one region of the active optical element in which the at least one optical power is to be produced depends on the user's gaze. Referring to the first example, when the user's gaze is straight (for example, for viewing a faraway object), the position of the central region in which a negative optical power is to be produced may be determined. Alternatively, when the user's gaze is downward (for example, for reading a book), the position of the peripheral region (or of a portion of the peripheral region) in which a positive optical power is to be produced may be determined.

Optionally, the shape of the at least one region depends on how electrodes and driving circuit of the active optical element are formed. The shape of the at least one region may be a simple closed curve, a sector, or similar. Referring to the first example, the central region may be shaped as a simple closed curve (i.e., a connected curve that does not cross itself, and ends at the same point where it begins), whereas the peripheral region may have an annular shape. Such an active optical element is referred hereinafter as an annular optical element, for the sake of convenience. One such annular optical element has been described, for example, in US patent application no. 17/987,938, which has been incorporated herein by reference. Examples of the simple closed curves include, but are not limited to, quadrilaterals, hexagons, octagons, circles, and ellipses. It will be appreciated that despite being called as a *"curve",* a given simple closed curve does not actually have to be curved in shape. Some simple closed curves are made of line segments only, and are known as polygons (for example, such as quadrilaterals, hexagons, octagons, and the like), while some simple closed curves are made by curved lines only (for example, such as circles and ellipses). Other simple closed curves are made of both line segments and curved lines. Optionally, the central region is shaped as a circle having a diameter that lies in a range of 20 millimetres to 35 millimetres; more optionally, in a range of 25 millimetres to 30 millimetres.

In a second example, the active optical element may comprise a central region and a plurality of regions surrounding the central region, wherein the plurality of regions are shaped as sectors. Such an active optical element is referred hereinafter as a sectored optical element, for the sake of convenience. One such sectored optical element has been described, for example, in US patent application no. 17/669,941, which has been incorporated herein by reference. In such an example, separate, unconnected segments of the electrodes may be utilised to selectively control the central region and each of the plurality of regions (namely, the sectors). These segments of the electrodes may be arranged in a form of a spiral phyllotactic pattern, so that positions of the plurality of regions (namely, the sectors) in the active optical element can be modified on the fly. This is particularly beneficial in a case where the given portion of the active optical element (at which the given optical power is to be produced) is selected based on the user's gaze.

In a third example, the active optical element may comprise a plurality of segments having a polygonal shape, wherein the plurality of segments fit together in a tiled manner. Such an active optical element is referred hereinafter as a segmented optical element, for the sake of convenience. One such segmented optical element has been described, for example, in US patent application no. 17/953,917, which has been incorporated herein by reference. The plurality of segments can be considered to be a plurality of regions of the active optical element. Some examples of the polygonal shape are hexagonal, rectangular, triangular. In such an example, the electrode may be deposited as a non-continuous, transparent electrode layer comprising separate, unconnected segments of said electrode layer on a substrate.

In a fourth example, the active optical element may be implemented as a liquid crystal Fresnel lens, wherein the electrode comprises a plurality of concentric ring electrodes. The liquid crystal Fresnel lens may have concentric zones that are formed between adjacent concentric ring electrodes.

Optionally, the optical centre of the at least one region depends on the user's gaze and how the active optical element is implemented. The optical centre of the at least one region could be a physical centre of the at least one region or could be a point that is different from the physical centre of the at least one region. The optical centre of the at least one region optionally lies along a direction of the user's gaze. In the first example, in the annular optical element, an optical centre of the central region may lie at a physical centre of the central region, whereas an optical centre of the peripheral region, due to the annular shape of the peripheral region, may be dynamically set according to the user's gaze. In the second example, in the sectored optical element, an optical centre of the central region may lie at a physical centre of the central region, whereas an optical centre of each of the plurality of regions may be dynamically set according to the user's gaze.

In some implementations, a physical shape of the active optical element is fixed (i.e., it does not change). In such implementations, the at least one optical power of the active optical element is changed dynamically by optionally actively controlling an active material (for example, a liquid crystal material, electrowetting fluids, etc.) filled inside the active optical element. However, an optical shape of the active optical element may optionally depend on an optical power to be produced by the active optical element. In other implementations, the active optical element may be made from a flexible membrane. In such implementations, when the optical power may be a positive optical power, the shape of the active optical element may be bulging outwards around a centre of the active optical element and curved inwards around edges of the active optical element. Likewise, when the optical power may be a negative optical power, the shape of the active optical element may be curved inwards around a centre of the active optical element and bulging outwards around edges of the active optical element.

Optionally, the profile of the active optical element is a function that is indicative of how one or more of: a focal length, a distortion, a chromatic aberration, vary across the active optical element. In other words, the profile of the active optical element defines an impact that said active optical element has on a light wavefront that is passing through.

It will be appreciated that the transparency within the active optical element may not be same throughout the active optical element. This means that a given portion of the active optical element may be fully transparent, while another portion of the active optical element may be translucent (i.e., partially transparent) or even opaque (i.e., not transparent). Optionally, the transparency of at least the portion of the active optical element depends on an intensity of external light which would pass through said portion to be incident on the user's eyes. For example, when the intensity of the external light along the gaze direction of the user is extremely high (for example, such as in case of an incoming glare of car headlamps, a direct glare of the sun, reflections of sunlight from a surface of a sea, reflections of sunlight from a surface of snow, and similar), at least the portion of the active optical element through which such light would pass is made translucent or opaque.

Optionally, the transparency of different portions of the active optical element is controllable to enable the user to focus on a given region of the real-world environment visible through the active optical element. Such controlling can be performed based on the gaze direction of the user, or for directing the gaze direction of the user in a particular manner. Referring to the first example, when the user is viewing straight at object(s) in the real-world environment through a centre portion of the central region of the active optical element, a remaining portion of the central region and the peripheral region can be made translucent or opaque, so that the user can view the object(s) in a sharp and a clear manner.

Optionally, the blur of different portions of the active optical is controllable to enable the user to focus on a given region of the real-world environment visible through the active optical element. Such controlling can be performed based on the gaze direction of the user, or for directing the gaze direction of the user in a particular manner. Referring to the first example, when the user is viewing straight at object(s) in the real-world environment through a centre portion of the central region of the active optical element, a remaining portion of the central region can be blurred, so that the user can view the object(s) in a sharp and clear manner.

Optionally, the colour of the active optical element depends on an intensity of ambient light in the real-world environment. In this regard, the colour of the active optical element is optionally gradually darkened as the intensity of ambient light increases. Optionally, in this regard, the active optical element is implemented as an electrochromatic optical element. The colour of the active optical element can be electrochemically switched between different colours, wherein the colour ranges from no colour to any colour in the visible spectrum. Alternatively, optionally, the active optical element is implemented as a polarising liquid crystal optical element. Herein, the active material in the polarising liquid crystal optical element is a polarising liquid crystal material, wherein an alignment of polarising liquid crystal molecules in the polarising liquid crystal material is controlled to selectively block certain wavelengths of light.

Optionally, the astigmatism correction mode is implemented using a segmented optical element (described in the aforementioned third example). When the astigmatism correction mode is switched on, a cylindrical aberration in the active optical element is introduced by controlling the optical powers of different sets of segments of the segmented optical element, said different sets being aligned along a cylindrical axis. This enables the active optical element to function as a spherocylindrical lens (namely, a prescription lens for correcting astigmatism).

Optionally, the prismatic correction mode of the active optical element is switched on or off depending on satisfaction of a given criteria. Herein, the given criteria is satisfied when the user has double vision, i.e., two overlapping images of a same object are formed on the user's eyes as light emanating from the same object falls on different parts of retina of the user's eyes. In this regard, when the given criteria is satisfied, the user is considered to suffer from diplopia. Optionally, in such a case, when the prismatic correction mode is switched on, the active material of the active optical element is controlled to provide a prismatic correction effect which aligns the two overlapping images to combine and form one image of the same object.

Furthermore, optionally, the active optical element comprises at least a first substrate and a second substrate that are optically transparent, the active material encased between the first substrate and the second substrate, wherein the controlling means (of the optical apparatus) is configured for controlling the active material to generate the at least one optical power of the active optical element. The optical transparency of the first substrate and the second substrate enable passage of light therethrough. The first substrate and the second substrate are arranged adjacent to each other in a manner that the active material is encased between the first substrate and the second substrate. Herein, the term *"active material"* refers to a material that is actively controllable to produce the at least one optical power at the at least one optical element. As an example, the active material can be a liquid crystal material.

For example, the first substrate and the second substrate may be arranged one on top of the other in an overlapping manner, thereby forming a cavity between the first substrate and the second substrate. Herein, the cavity is filled with the active material. Optionally, when only one of the first substrate and the second substrate has a curvature, a light ray incident on such a substrate converges or diverges according to the curvature. In such a case, another of the first substrate and the second substrate can be made significantly thin, so as to not falsely converge or diverge the light ray. A refractive index of the first substrate can be same as or different from a refractive index of the second substrate. Moreover, the first substrate and/or the second substrate can be made of any one of: a glass, a polycarbonate, a plastic, a high-index plastic. Other examples of materials suitable for the first substrate and/or the second substrate are well within the scope of the present disclosure.

Throughout the present disclosure, the term *"controlling means"* refers to a drive circuit that, in operation, controls the one or more optical parameters of the active optical element. Optionally, the controlling means comprises: at least one first electrode deposited on the first substrate and disposed between the first substrate and the active material; and at least one second electrode deposited on the second substrate and disposed between the second substrate and the active material, wherein the at least one first electrode and the at least one second electrode are optically transparent. In this case, the at least one first electrode and the at least one second electrode are driven by the driving circuit of the active optical element. For example, when the active material is the liquid crystal material, an alignment of liquid crystal molecules of the liquid crystal material may be controlled to adjust a refractive index of the liquid crystal material in the active optical element.

It will be appreciated that the at least one processor is communicably coupled to the eye-tracking means and the controlling means. The at least one processor could be implemented as any one of: a microprocessor, a microcontroller, or a controller. As an example, the at least one processor could be implemented as an application-specific integrated circuit (ASIC) chip or a reduced instruction set computer (RISC) chip.

The at least one of the one or more optical parameters of the active optical element are to be changed only when the trigger for such changing is detected by the at least one processor. When the trigger is detected (using various embodiments as described in detail below under the heading 'Trigger Detection'), it is accurately ascertained by the at least one processor that the at least one of the one or more optical parameters needs to be changed based on a presence of a viewing condition which initiates the trigger, and the at least one processor optionally implements such a change based on inferences made during detecting of the trigger.

In order to change the at least one of the one or more optical parameters of the active optical element, the controlling means is driven using a drive signal, wherein the drive signal is generated based on which optical parameter(s) is/are to be changed. It will be appreciated that drive signals for active optical elements corresponding to different eyes of the user may be different. Optionally, the drive signal generates a potential difference between the at least one first electrode and the at least one second electrode. The active material may be controlled (for example, its refractive index, a curvature of its meniscus, or similar, may be controlled) based on the drive signal. In some exemplary implementations, when a zero potential difference is generated (namely, by applying a same voltage to both the aforesaid electrodes or by connecting both the aforesaid electrodes to an electrical ground), the active optical element is in an 'OFF' mode in which said active optical element has a default optical power, which may be a negative optical power, a zero optical power, or a positive optical power, depending on the user's requirement. In other exemplary implementations, the active optical element is in an 'ON' mode in which the at least one optical power is produced, when at least one potential difference is generated between the at least one first electrode and the at least one second electrode depending on the at least one optical power that is to be produced. In this regard, the at least one first electrode and the at least one second electrode can be supplied with varying voltages to allow different amounts of the potential difference to be generated therebetween. As an example, the at least one first electrode could be driven at a given voltage that corresponds to the given optical power to be produced, while the at least one second electrode could be connected to an electrical ground. A technical effect of driving the controlling means during the eye blink is that the at least one of the one or more optical parameters can be changed without affecting the viewing experience of the user, as said change will be imperceptible to the user during the eye blink. Moreover, a duration of making such a change lies within a typical duration of the eye blink, thereby enabling such imperceptibility of the change. Hence, the controlling means can beneficially delay performing the change in the at least one of the one or more optical parameters of the active optical element until an upcoming eye blink, depending on the inferences made during the detection of the trigger.

Optionally, the at least one processor is configured to:
determine an average frequency at which previous eye blinks of the user have occurred;
predict a time duration after which a next eye blink is expected to occur, based on the average frequency and time elapsed since a last eye blink of the user; and
when the predicted time duration is longer than a predefined time threshold, drive the controlling means to change the at least one of the one or more optical parameters of the active optical element without a delay.

In this regard, when determining the average frequency, previously-recorded time instants of occurrence of the previous eye blinks are analysed, and these previously-recorded time instants are used to determine an average time interval between the previous eye blinks. A reciprocal of the average time interval between the previous eye blinks is equal to the average frequency of the previous eye blinks. For example, the average frequency of the previous eye blinks may be an average number of previous eye blinks per minute. The time duration after which the next eye blink is expected to occur can be accurately predicted simply using, for example, at least one mathematical formula. As an example, the user may have previously blinked once every 4 seconds. Based on their last eye blink, 1 second may have elapsed. Hence, the time duration after which the next eye blink is expected to occur may be predicted to be 3 seconds.

The predicted time duration being longer than the predefined time threshold means that the next eye blink would occur after a substantial time duration would elapse from a current time instant. Therefore, beneficially, the at least one of the one or more optical parameters of the active optical element is changed without the delay in such a case, so that the user's viewing experience is not compromised for the substantial time duration on account of waiting to implement said change during the next eye blink. Alternatively, optionally, when the predicted time duration is shorter than or equal to the predefined time threshold, the change in the at least one of the one or more optical parameters is performed during the upcoming eye blink. In such a case, the time duration of waiting until the next eye blink is short enough to not severely compromise the user's viewing experience.

Optionally, this predefined time threshold lies in a range of 1 second to 10 seconds. The predefined time threshold lies in a range of 1, 2, 3, 5, or 7 seconds up to 4, 6, 8, 9, or 10 seconds. As an example, the predefined time threshold may be 5 seconds. Continuing with reference to the above example, in one instance, the predefined time threshold may be 5 seconds. Based on their last eye blink, when the predicted time duration is 3 seconds, the at least one of the one or more optical parameters of the active optical element may be changed at the next eye blink. In another example, the predefined time threshold may be 2 seconds. Now when the predicted time duration is 3 seconds, the at least one of the one or more optical parameters of the active optical element may be changed without a delay.

### Trigger Detection:

Optionally, when detecting the trigger, the at least one processor is configured to:
determine an optical depth at which the user is fixating;
select a predefined optical power, from amongst a plurality of predefined optical powers, based on the optical depth at which the user is fixating; and
detect a difference between the predefined optical power and a current optical power being produced by the active optical element,
wherein the at least one processor is further configured to, when said difference is smaller than a predefined difference, drive the controlling means to change the at least one of the one or more optical parameters of the active optical element during the eye blink, by performing a transition from the current optical power to the predefined optical power.

A technical effect of such a manner of detecting the trigger is that both the need for the change in the at least one of the one or more optical parameters of the active optical element, and a change in the optical power that is required, are accurately determined. Moreover, employing a duration of the eye blink for making the change in the at least one of the one or more optical parameters, when the difference in the optical powers is smaller than the predefined difference (namely, in case of a small change), enables in effectively implementing such a change in a visually imperceptible manner. This allows provision of a seamless viewing experience to the user. Notably, as the difference is smaller than the predefined difference, the user's eyes are able to manage the user's viewing experience without any noticeable deterioration while the optical apparatus waits for the upcoming eye blink to start. However small the difference may be, if the change were made while the user is looking through the active optical element, the user would perceive it.

The optical depth at which the user is fixating could be understood to be a fixation depth. The phrase *"user is fixating"* means that the user is trying to fixate on (i.e., focus at) a certain optical depth. Optionally, when determining the optical depth at which the user is fixating, the at least one processor is configured to process the eye-tracking data to determine gaze directions of the user's eyes, and determine the optical depth at which the user is fixating based on the gaze directions of the user's eyes. Alternatively, optionally, when determining the optical depth at which the user is fixating, the at least one processor is configured to receive fixation information from an external device comprising a camera, wherein the fixation information is indicative of at least one of: the gaze directions of the user's eyes, an optical depth at which the user is looking. In this regard, the external device may be a smartphone, a laptop computer, a tablet computer, or similar.

The plurality of predefined optical powers correspond to different optical depths at which the user's eyes may fixate. Herein, the predefined optical power for a given eye of the user may be the negative optical power, the zero optical power, or the positive optical power, depending on the optical depth and the user's requirement (namely, whether the user has presbyopia or myopia). Moreover, the plurality of predefined optical powers could be exact optical powers that the user needs to fixate properly at the different optical depths and/or nearest optical powers conforming to the user's need. When the predefined optical power corresponding to the optical depth of fixating is selected and employed for the user's eye, said eye would perceive high visual detail of object(s) at the given optical depth once the eye is fixated. In this case, the predefined optical power enables a region of the real-world environment (fixated at by the user's eye) to be sharply focused on the fovea of the user's eye. Herein, since the current optical power is currently produced at the active optical element, and is different from the predefined optical power, there exists the difference between the predefined optical power and the current optical power.

The difference between the predefined optical power and the current optical power being smaller than the predefined difference means that the current optical power is comparable to (i.e., similar to) the predefined optical power. This means that the current optical power can be employed until the next eye blink, without adversely compromising much on the user's viewing experience. Therefore, in such a case, the controlling means is beneficially controlled to delay changing of the at least one of the one or more parameters till the next eye blink, so that the transition from the current optical power to the predefined optical power occurs during the eye blink.

Optionally, the at least one processor is configured to drive the controlling means to perform the transition from the current optical power to the predefined optical power without a delay, when said difference is not smaller than the predefined difference. A technical effect of performing the transition from the current optical power to the predefined optical power without the delay in such a situation is that the visual experience of the user is improved immediately upon such transitioning. In this regard, when said difference is not smaller than the predefined difference, it means that the change required in the at least one of the one or more optical parameters for transitioning from the current optical power to the predefined optical power is high, and any delay in implementing this change will highly compromise the user's viewing experience. Hence, this transition is not delayed until the next eye blink, as it is imperative to immediately make this transition. For example, when the user is viewing a faraway object and then immediately starts viewing (i.e., fixating at) a nearby object, the difference between the predefined optical power and the current optical power would be too high (namely, greater than the predefined difference). Then the at least one of the one or more optical parameters may be changed without the delay to produce the predefined optical power immediately at the active optical element, for correcting (i.e., improving) the user's viewing experience.

Optionally, in this regard, the predefined difference lies in a range of 0.25 dioptre to 3 dioptre. Based on the predefined difference, a decision about delaying the change in the at least one of the one or more optical parameters to produce the predefined optical power until the next eye blink can be made effectively, in a manner that the user's viewing experience is not compromised adversely. In other words, making the transition from the current optical power to the predefined optical power can be scheduled properly, using the predefined difference, to ensure a good viewing experience for the user. The predefined difference may lie in a range from 0.25, 0.35, 0.5, 0.75, 1, 1.5, or 2 dioptre up to 1, 1.75, 2.25, 2.75, or 3 dioptre.

For example, the predefined optical power may be 0.85 dioptre (D) and the current optical power may be 0.5 D. In such a case, the difference between the predefined optical power and the current optical power is 0.35 D (i.e., 0.85 D - 0.5 D). Consider that the predefined difference is 0.5 D. As said difference is smaller than the predefined difference, the transition from the current optical power to the predefined optical power may be made during the upcoming eye blink. In another example, the predefined optical power may be 1.5 D and the current optical power may be -0.5 D. In such a case, the difference between the predefined optical power and the current optical power is 2 D (i.e., 1.5 D - (-0.5 D)). Consider that the predefined difference is 1 D. As said difference is greater than the predefined difference, the transition from the current optical power to the predefined optical power may be made without any delay.

Moreover, optionally, when detecting the trigger, the at least one processor is configured to:
determine a gaze direction of a given eye of the user, whilst determining an optical depth at which the user is fixating;
select a predefined optical power, from amongst a plurality of predefined optical powers, based on the optical depth at which the user is fixating;
select a region of the active optical element in which the predefined optical power is to be produced, based on the gaze direction; and
detect an overlap of less than a predefined percent between the selected region and a current region of the active optical element in which a current optical power is being produced;
wherein the at least one processor is further configured to, when the overlap between the selected region and the current region is less than the predefined percent, drive the controlling means to change the at least one of the one or more optical parameters of the active optical element without any delay, by producing the predefined optical power in the selected region.

A technical effect of such a gaze-based selection of the region of the active optical element in which the predefined optical power is to be produced, is that the predefined optical power can be dynamically produced at different regions of the optical apparatus in real time or near-real time according to the user's gaze. This enables the user to properly focus on object(s) in the real-world environment clearly at all times, according to their optical depths. As an example, the user may be installing a lighting fixture on a ceiling of a room, while his/her tools may be lying on a floor of the room. In such a case, the user may need to look at the lighting fixture and at the tools at different points in time, via a top region and a bottom region of the active optical element, respectively, when the optical apparatus is worn by the user. Appropriate optical depth-based optical powers are produced at the top region and the bottom region of the active optical element, when the user needs to focus on the lighting fixture and the tools, respectively.

The term *"gaze direction"* refers to a direction in which the given eye of the user is gazing. It is to be understood that when the user's gaze is directed (namely, focused) towards a point or a region within the real-world environment, a gaze direction of a first eye and a gaze direction of a second eye of the user are different from each other.

Optionally, the optical depth at which the user is fixating is determined based on a convergence of the gaze directions of the user's eyes. In this regard, the optical depth can be determined, based on an inter-pupillary distance of the user, by using triangulation. Additionally, or alternatively, the optical depth can be determined based on depth information of the real-world environment and the gaze direction of the given eye of the user. In this regard, the depth information can be collected using at least one of: a depth camera, a time-of-flight (ToF) camera, an ultrasound imaging sensor, a radar, a light detection and ranging (LiDAR) sensor. This depth information is optionally a part of the fixation information.

The predefined optical power can be selected as described earlier. Herein, optionally, the region of the active optical element in which the predefined optical power is to be produced is selected as a region which lies along the gaze direction of the given eye. When the overlap between the selected region and the current region is less than the predefined percent, it means that the user is now gazing through a considerably different region of the active optical element than the current region. In this regard, the current region does not overlap much with the selected region, and therefore it is required to change the at least one of the one or more optical parameters of the active optical element immediately so that the user is able to properly gaze through the selected region at the optical depth at which the user is fixating. This change may be perceived by the user's eyes, but the viewing experience is dynamically updated.

When the overlap between the selected region and the current region is greater than or equal to the predefined percent, it means that the user is gazing through a similar region of the active optical element as the current region. In this regard, the current region significantly overlaps with the selected region, and therefore waiting until the next eye blink to change the at least one of the one or more optical parameters will not adversely impact the viewing experience of the eye, and will also offer benefits of imperceptibility of making said change. Therefore, in such a case, said change is made during the next eye blink.

Optionally, the predefined percent lies in a range of 20 percent to 80 percent. The predefined percent lies in a range of 20, 25, 30, 45, or 65 percent up to 35, 55, 70, 75 or 80 percent. For example, the predefined percent may be 50 percent. In one case, the overlap between the selected region and the current region of the active optical element may be 20 percent. Hence, in such a case, the at least one of the one or more optical parameters of the active optical element may be changed without any delay. In another case, the overlap between the selected region and the current region of the active optical element may be 80 percent. Hence, the at least one of the one or more optical parameters of the active optical element may be changed at the next eye blink.

Furthermore, optionally, when detecting the trigger, the at least one processor is configured to:
determine a gaze direction of a dominant eye of the user and a gaze direction of a non-dominant eye of the user;
detect when a given criteria is satisfied, wherein the given criteria is satisfied when at least one of the following is true:
   (i) the gaze direction of the dominant eye and the gaze direction of the non-dominant eye has not converged for at least a predefined time period,
   (ii) the gaze direction of the dominant eye and the gaze direction of the non-dominant eye has not converged within a predefined error margin from each other; and
wherein the at least one processor is further configured to, when the given criteria is satisfied, drive the controlling means to change the at least one of the one or more optical parameters of the active optical element during the eye blink, by producing, at a dominant-eye optical element, an optical power that is different from a predefined dominant-eye optical power corresponding to the dominant eye, whilst producing, at a non-dominant-eye optical element, a predefined non-dominant-eye optical power corresponding to the non-dominant eye.

A technical effect of such a manner of detecting the trigger is that a satisfaction of the given criteria, which subsequently decides a requirement of a treatment for the non-dominant eye, is accurately determined. Moreover, employing a duration of the eye blink for implementing said treatment enables in effectively providing a visually imperceptible treatment to the user. In this regard, an eye of the user whose visual input is more preferred by the brain as compared to that of another eye of the user, is referred to as a *"dominant eye"* of the user, and the another eye of the user whose visual input is less preferred by the brain is referred to as a *"non-dominant eye".* Herein, an ocular dominance of the user may be a matter of preference, or indicative of an underlying medical condition from which the user suffers. Such a medical condition may be, for example, amblyopia, constant strabismus, intermittent strabismus, or the like. Herein, the dominant eye can be any one of a left eye or a right eye of the user, and correspondingly, the non-dominant eye can be another one of the left eye or the right eye of the user.

In some implementations, information indicative of the dominant eye and the non-dominant eye of the user is pre-determined and is pre-stored for the user, at a data repository that is communicably coupled to the at least one processor. In other implementations, the at least one processor is configured to determine the dominant eye during an initial calibration of the optical apparatus according to the user's eyes.

Optionally, the gaze direction of the dominant eye and the gaze direction of the non-dominant eye are determined based on the eye-tracking data. Optionally, the at least one processor is further configured to determine a distance (i.e., an optical depth) of a given object in the real-world environment at which the user is looking, from the user's eyes, when the gaze direction of the dominant eye and the gaze direction of the non-dominant eye converge at the given object. In this regard, the optical depth can be determined as described earlier.

When the given criteria is satisfied, the user may be considered to suffer from amblyopia, strabismus, or similar. It will be appreciated that in order to clearly see the object(s) in the real-world environment with binocular vision, the gaze direction of the dominant eye and the gaze direction of the non-dominant eye need to converge at those object(s). When light emanating from a point of gaze convergence falls on the fovea of the dominant eye, but does not fall on the fovea of the non-dominant eye, there is a mismatch between a foveal vision of the dominant eye with a foveal vision of the non-dominant eye. Hence, when the foveal vision of the dominant eye and the foveal vision of the non-dominant eye do not overlap for at least the predefined time period, it means that the user's brain is preferring the dominant eye (over the non-dominant eye) to see the object(s) in the real-world environment (i.e., the user suffers from amblyopia, strabismus, or similar). It is possible that the gaze direction of the dominant eye and the gaze direction of the non-dominant eye do not converge for a very small fraction of time, but converge majority of the time. Alternatively, it is also possible that the gaze direction of the non-dominant eye consistently misses to converge with the gaze direction of the non-dominant eye. Therefore, for both the possibilities, it is beneficial to check whether the gaze direction of the dominant eye and the gaze direction of the non-dominant eye have not been converging for at least the predefined time period. Such non-convergence could be indicative of the user suffering from amblyopia, strabismus, or similar.

Moreover, optionally, a first drive signal is generated to produce the optical power that is different from the predefined dominant-eye optical power, so that the visual acuity (i.e., vision quality) of the dominant eye is decreased. Simultaneously, a second drive signal is generated to produce the predefined non-dominant-eye optical power corresponding to the non-dominant eye, so that the visual acuity of the non-dominant eye is increased. Herein, the predefined dominant-eye optical power is an optical power (i.e., a negative optical power, a zero optical power, or a positive optical power) that is to be produced corresponding to the dominant eye, for enabling high visual acuity (i.e., perfect or near-perfect vision) of the dominant eye. Similarly, the predefined non-dominant-eye optical power is an optical power (i.e., a negative optical power, a zero optical power, or a positive optical power) that is to be produced corresponding to the non-dominant eye, for enabling high visual acuity (i.e., perfect or near-perfect vision) of the non-dominant eye. The predefined dominant-eye optical power and the predefined non-dominant eye optical power depend on the optical depth at which the user is looking. Hence, when a treatment mode of the optical apparatus is switched on, the non-dominant eye's vision is optionally corrected by using the predefined non-dominant-eye optical power, while leaving the dominant eye's vision uncorrected or lowering the dominant eye's vision by using the optical power that is different from the predefined dominant-eye optical power. Advantageously, this compels (in other words, trains) the brain of the user to prefer the vision from the non-dominant eye, thereby improving a base vision quality of the user's eyes. Consequently, over time, the brain will eventually start using both the dominant eye and the non-dominant eye with similar priority (i.e., without preferring any particular eye over the other). Furthermore, advantageously, the change in the at least one of the one or more optical parameters of the active optical element can be delayed until the next eye blink, as said change will not deteriorate the viewing experience of the user in a time period (of waiting) until the next eye blink. In this regard, said treatment can be started effectively during the upcoming eye blink. Likewise, when the given criteria is not satisfied (after the treatment started), the treatment can be discontinued during an upcoming eye blink.

Furthermore, optionally, the optical apparatus further comprises a plurality of light sensors, wherein when detecting the trigger, the at least one processor is configured to detect when a light intensity of light signals sensed by the plurality of light sensors exceeds a predefined threshold intensity,
wherein the at least one processor is further configured to, when the light intensity of the light signals sensed by the plurality of light sensors exceeds the predefined threshold intensity, drive the controlling means to change the at least one of the one or more optical parameters of the active optical element during the eye blink, by adjusting at least one of: a transparency, a colour, of at least a portion of the active optical element.

A technical effect of such a manner of detecting the trigger is that when and how much change in the at least one of the one or more optical parameters of the active optical element is required based on the light intensity of the light signals, is accurately determined. Moreover, employing a duration of the eye blink for making said change, when the light intensity of the light signal exceeds the predefined threshold intensity, enables in effectively maintaining a quality of the viewing experience of the user without making imperceptible changes and without adversely impacting a health of the user's eyes.

Herein, the *"light sensors"* detect the light signals and measure the light intensity of said light signals, by converting an energy of the light signals into corresponding electrical signals that can be measured and analysed. Examples of such light sensors may include, but are not limited to, photodiodes, phototransistors, and photoresistors. The light signals emanate from active light sources and/or passive light sources in the real-world environment. Examples of such active light sources may include, but are not limited to, light emitting diode (LED) lights, infrared lights, incandescent bulbs. Examples of such passive light source may include, but are not limited to, reflective surfaces like mirrors and/or polished metals, surfaces that reflect ambient light, and sun.

Optionally, the plurality of light sensors are arranged on an external portion of the optical apparatus. In this regard, the plurality of light sensors are arranged to face a region of the real-world environment that corresponds to the user's field of view. Moreover, a number and an arrangement of the plurality of light sensors is selected in a manner that the plurality of light sensors sufficiently completely cover different directions from which the light signals may emanate and reach the optical apparatus, and thus facilitates in accurate detecting of the light signals and their light intensity. The light intensity can be measured in terms of watts per square metre, candela, lumen, lux, or similar.

The predefined threshold intensity lies in a range of 1000 lux to 100000 lux. The predefined threshold intensity lies in a range of 1000, 2000, 3000, 5000, 10000, 20000, 40000, or 70000 lux up to 4000, 9000, 15000, 30000, 60000, 80000, 90000, or 100000 lux. The predefined threshold intensity depends on an ambient light in the user's surroundings. As an example, in a case when the user's eyes are adapted to a low level of light (for example, such as when driving through a tunnel), a change to 1000 lux of light would feel blinding to the user. It will be appreciated that the light intensity of the light signals exceeding the predefined threshold intensity means that the transparency and/or the colour of the active optical element needs to be changed immediately such that the user's eyes can be safeguarded against any damage. When the light intensity is less than the predefined threshold intensity, the at least one of the one or more optical parameters is beneficially changed during the eye blink, such that said change is imperceptible to the user, and the user is able to comfortably look at the real-world environment.

Optionally, the transparency of at least the portion of the active optical element is adjusted, based on the light intensity of the light signals (i.e., a brightness of the light signals). For example, a glare of the sun may fall on a right portion of the active optical element, so the right portion can be made translucent or opaque, in order to reduce an intensity of the glare falling on the user's eyes through the right portion of the active optical element.

Optionally, the colour of at least the portion of the active optical element is adjusted, based on the light intensity of the light signals (i.e., a brightness of the light signals). For example, a glare of the sun may fall on a top portion of the active optical element, so the top portion is turned darker, in order to reduce an intensity of the glare falling on the user's eyes through the top portion of the active optical element.

Optionally, the at least one processor is further configured to:
determine a gaze direction of a given eye of the user; and
select the portion of the active optical element in which the at least one of: the transparency, the colour, is to be adjusted, based on the gaze direction.

A technical effect of such a gaze-based selection of said portion is that the at least one of the one or more optical parameters can be changed dynamically for different portions of the active optical element according to the user's gaze. This enables the user to see the real-world environment clearly according to lighting situations in the real-world environment at all times, without straining the eye or damaging the eye. The gaze direction of the given eye of the user can be determined based on the eye-tracking data. As the gaze direction is the direction along which the user's eye is focused, an improper light intensity of light signals along the gaze direction could cause significant discomfort and damage to the user's eye, which is highly undesirable. Therefore, at least the portion of the active optical element that lies along the gaze direction of the user is adjusted in terms of its transparency and/or colour, to provide a safe and smooth viewing experience to the user irrespective of the lighting situations in the real-world environment.

The at least one portion of the active optical element optionally lies along the direction of the user's gaze. In an instance, based on the gaze direction, one portion of the active optical element may be selected to change the at least one of: the transparency, the colour. Alternatively, in another instance, based on the gaze direction, multiple portions of the active optical element may be selected, wherein a magnitude of the change in the at least one of: the transparency, the colour for each portion amongst the multiple portions may be different from each other, and may be based on a distance of said portion from a gaze point on the active optical element (wherein the gaze point is determined based on the gaze direction of the given eye). Referring to the aforementioned first example of an annular optical element, the peripheral region may comprise four portions surrounding the central region. The central region may be exactly along the gaze direction of the given eye of the user. When the light intensity of the light signals is greater than the predefined threshold intensity, the transparency of all regions of the active optical element may be adjusted such that a transparency of the central region is lesser than a transparency of the four portions in the peripheral region.

The present disclosure also relates to the method as described above. Various embodiments and variants disclosed above, with respect to the aforementioned system, apply *mutatis mutandis* to the method. The method is implemented by an optical apparatus comprising eye-tracking means, an active optical element per eye, controlling means for controlling one or more optical parameters of the active optical element, and at least one processor.

Optionally, the step of detecting the trigger comprises:
determining an optical depth at which the user is fixating;
selecting a predefined optical power, from amongst a plurality of predefined optical powers, based on the optical depth at which the user is fixating; and
detecting a difference between the predefined optical power and a current optical power being produced by the active optical element,
wherein the method further comprises when said difference is smaller than a predefined difference, driving the controlling means to change the at least one of the one or more optical parameters of the active optical element during the eye blink, by performing a transition from the current optical power to the predefined optical power.

Optionally, the method further comprises driving the controlling means to perform the transition from the current optical power to the predefined optical power without a delay, when said difference is not smaller than the predefined difference.

Optionally, the step of detecting the trigger comprises:
determining a gaze direction of a given eye of the user, whilst determining an optical depth at which the user is fixating;
selecting a predefined optical power, from amongst a plurality of predefined optical powers, based on the optical depth at which the user is fixating;
selecting a region of the active optical element in which the predefined optical power is to be produced, based on the gaze direction; and
detecting an overlap of less than a predefined percent between the selected region and a current region of the active optical element in which a current optical power is being produced;
wherein the method further comprises when the overlap between the selected region and the current region is less than the predefined percent, driving the controlling means to change the at least one of the one or more optical parameters of the active optical element without any delay, by producing the predefined optical power in the selected region.

Optionally, the step of detecting the trigger comprises:
determining a gaze direction of a dominant eye of the user and a gaze direction of a non-dominant eye of the user;
detecting when a given criteria is satisfied, wherein the given criteria is satisfied when at least one of the following is true:
   (i) the gaze direction of the dominant eye and the gaze direction of the non-dominant eye has not converged for at least a predefined time period,
   (ii) the gaze direction of the dominant eye and the gaze direction of the non-dominant eye has not converged within a predefined error margin from each other; and
wherein the method further comprises when the given criteria is satisfied, driving the controlling means to change the at least one of the one or more optical parameters of the active optical element during the eye blink, by producing, at a dominant-eye optical element, an optical power that is different from a predefined dominant-eye optical power corresponding to the dominant eye, whilst producing, at a non-dominant-eye optical element, a predefined non-dominant-eye optical power corresponding to the non-dominant eye.

Optionally, the step of detecting the trigger comprises detecting when a light intensity of light signals sensed by a plurality of light sensors exceeds a predefined threshold intensity,
wherein the method further comprises when the light intensity of the light signals sensed by the plurality of light sensors exceeds the predefined threshold intensity, driving the controlling means to change the at least one of the one or more optical parameters of the active optical element during the eye blink, by adjusting at least one of: a transparency, a colour, of at least a portion of the active optical element.

Optionally, the method further comprises:
determining a gaze direction of a given eye of the user; and
selecting the portion of the active optical element in which the at least one of: the transparency, the colour, is to be adjusted, based on the gaze direction.

Optionally, the method further comprises:
determining an average frequency at which previous eye blinks of the user have occurred;
predicting a time duration after which a next eye blink is expected to occur, based on the average frequency and time elapsed since a last eye blink of the user; and
when the predicted time duration is longer than a predefined time threshold, driving the controlling means to change the at least one of the one or more optical parameters of the active optical element without a delay.

### DETAILED DESCRIPTION OF THE DRAWINGS

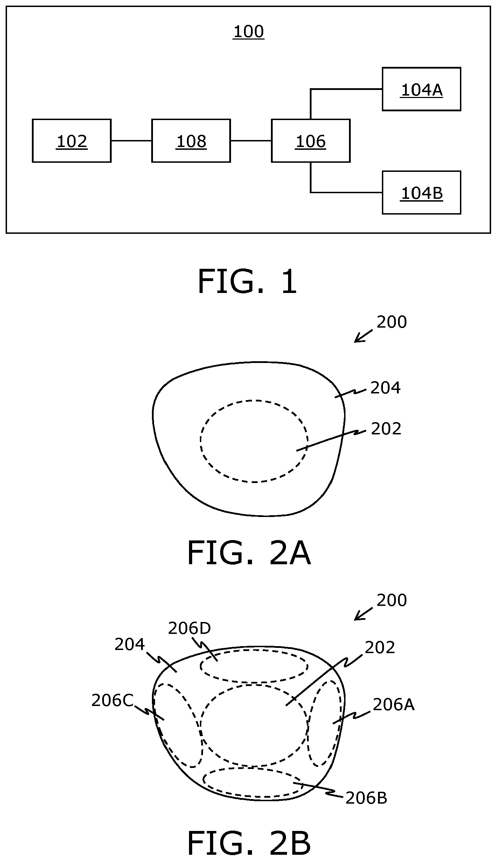

Referring to FIG. 1, illustrated is a block diagram of an optical apparatus **100,** in accordance with an embodiment of the present disclosure. The optical apparatus **100** comprises eye-tracking means **102,** an active optical element per eye (depicted as an active optical element **104A** for a first eye and an active optical element **104B** for a second eye), controlling means **106** for controlling one or more optical parameters of the active optical elements **104A** and **104B,** and at least one processor (depicted as a processor **108**). The processor **108** is communicably coupled to the eye-tracking means **102** and the controlling means **106.** The processor **108** is configured to perform various operations as described earlier.

FIG. 1 is merely an example, which should not unduly limit the scope of the claims herein. A person skilled in the art will recognize many variations, alternatives, and modifications of embodiments of the present disclosure. For example, the controlling means **106** could be implemented as separate controlling means per eye.

Referring to FIGs. 2A and 2B, illustrated are schematic illustrations of an active optical element **200,** in accordance with different embodiments of the present disclosure. In both FIG. 2A and FIG. 2B, there are shown two regions **202** and **204** of the active optical element **200.** The region **202** is a central region of the active optical element **200** whereas the region **204** is a peripheral region of the active optical element **200.** The region **204** is shown to surround the region **202.** At least one of: the region **202,** the region **204,** has adjustable optical power. In FIG. 2B, there are shown four portions **206A, 206B, 206C,** and **206D** of the region **204.**

FIGs. 2A and 2B are merely examples, which should not unduly limit the scope of the claims herein. It is to be understood that the specific implementations of the active optical element **200** are provided as examples and are not to be construed as limiting it to specific numbers, sizes, or shapes of regions, portions of regions, and similar. A person skilled in the art will recognize many variations, alternatives, and modifications of embodiments of the present disclosure. For example, the active optical element **200** could also have an intermediate region between the two regions **202** and **204.**

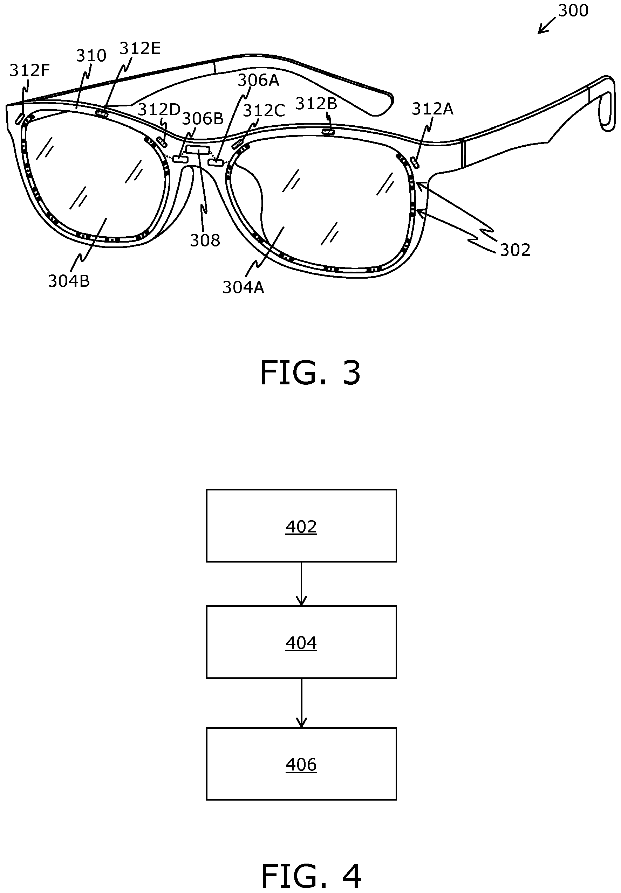

Referring to FIG. 3, illustrated is a schematic illustration of an optical apparatus **300,** in accordance with an embodiment of the present disclosure. The optical apparatus **300** comprises eye-tracking means **302,** an active optical element per eye (depicted as an active optical element **304A** for a left eye and an active optical element **304B** for a right eye), controlling means **306A** and **306B** for controlling one or more optical parameters of the active optical elements **304A** and **304B,** respectively, and at least one processor (depicted as a processor **308**). The processor **308** is communicably coupled to the eye-tracking means **302** and the controlling means **306A-B.** As shown, the optical apparatus **300** is implemented as a pair of eyeglasses. In this regard, the optical apparatus **300** is shown to further comprise a frame **310** that is employed to hold the active optical elements **304A-B.** Optionally, the optical apparatus **300** further comprises a plurality of light sensors (depicted as slanted-hatched light sensors **312A-F).** The light sensors **312A-F** may be employed to detect a light intensity of light signals incident thereupon from a real-world environment.

FIG. 3 is merely an example, which should not unduly limit the scope of the claims herein. It is to be understood that the specific implementations of the optical apparatus **300** are provided as examples and are not to be construed as limiting it to specific numbers, sizes, or shapes of eye-tracking means, active optical elements, controlling means, plurality of light sensors, and similar. A person skilled in the art will recognize many variations, alternatives, and modifications of embodiments of the present disclosure.

Referring to FIG. 4, illustrated is a flowchart illustrating steps of a method incorporating optical adjustment in adaptive lenses during eye blinks, in accordance with an embodiment of the present disclosure. At step **402,** there is detected a trigger for changing at least one of one or more optical parameters of an active optical element. At step **404,** eye-tracking data, collected by an eye-tracking means, is processed to detect a beginning of an eye blink of a user. At step **406,** controlling means is driven for changing the at least one of the one or more optical parameters of the active optical element during the eye blink.

The aforementioned steps are only illustrative and other alternatives can also be provided where one or more steps are added, one or more steps are removed, or one or more steps are provided in a different sequence without departing from the scope of the claims herein.

## Claims

1. An optical apparatus (100, 300) comprising:
eye-tracking means (102, 302);
an active optical element (104A-B, 200, 304A-B) per eye;
controlling means (106, 306A-B) for controlling one or more optical parameters of the active optical element; and
at least one processor (108, 308) configured to:
detect a trigger for changing at least one of the one or more optical parameters of the active optical element;
process eye-tracking data, collected by the eye-tracking means, to detect a beginning of an eye blink of a user; and
drive the controlling means to change the at least one of the one or more optical parameters of the active optical element during the eye blink.

2. The optical apparatus (100, 300) of claim 1, wherein the one or more optical parameters of the active optical element (104A-B, 200, 304A-B) comprise at least one of: at least one optical power to be produced, a position of at least one region (202, 204) of the active optical element in which the at least one optical power is to be produced, a shape of the at least one region, an optical centre of the at least one region, a shape of the active optical element, a profile of the active optical element, a transparency of at least a portion (206A-D) of the active optical element, a blur of at least a portion of the active optical element, a colour of the active optical element, whether an astigmatism correction mode of the active optical element is switched on or off, whether a prismatic correction mode of the active optical element is switched on or off.

3. The optical apparatus (100, 300) of any of the preceding claims, wherein when detecting the trigger, the at least one processor (108, 308) is configured to:
determine an optical depth at which the user is fixating;
select a predefined optical power, from amongst a plurality of predefined optical powers, based on the optical depth at which the user is fixating; and
detect a difference between the predefined optical power and a current optical power being produced by the active optical element (104A-B, 200, 304A-B),
wherein the at least one processor is further configured to, when said difference is smaller than a predefined difference, drive the controlling means (106, 306A-B) to change the at least one of the one or more optical parameters of the active optical element during the eye blink, by performing a transition from the current optical power to the predefined optical power.

4. The optical apparatus (100, 300) of claim 3, wherein the at least one processor (108, 308) is configured to drive the controlling means (106, 306A-B) to perform the transition from the current optical power to the predefined optical power without a delay, when said difference is not smaller than the predefined difference.

5. The optical apparatus (100, 300) of any of the preceding claims, wherein when detecting the trigger, the at least one processor (108, 308) is configured to:
determine a gaze direction of a given eye of the user, whilst determining an optical depth at which the user is fixating;
select a predefined optical power, from amongst a plurality of predefined optical powers, based on the optical depth at which the user is fixating;
select a region (202, 204) of the active optical element (104A-B, 200, 304A-B) in which the predefined optical power is to be produced, based on the gaze direction; and
detect an overlap of less than a predefined percent between the selected region and a current region of the active optical element in which a current optical power is being produced;
wherein the at least one processor is further configured to, when the overlap between the selected region and the current region is less than the predefined percent, drive the controlling means (106, 306A-B) to change the at least one of the one or more optical parameters of the active optical element without any delay, by producing the predefined optical power in the selected region.

6. The optical apparatus (100, 300) of any of the preceding claims, wherein when detecting the trigger, the at least one processor (108, 308) is configured to:
determine a gaze direction of a dominant eye of the user and a gaze direction of a non-dominant eye of the user;
detect when a given criteria is satisfied, wherein the given criteria is satisfied when at least one of the following is true:
(i) the gaze direction of the dominant eye and the gaze direction of the non-dominant eye has not converged for at least a predefined time period,
(ii) the gaze direction of the dominant eye and the gaze direction of the non-dominant eye has not converged within a predefined error margin from each other; and
wherein the at least one processor is further configured to, when the given criteria is satisfied, drive the controlling means (106, 306A-B) to change the at least one of the one or more optical parameters of the active optical element (104A-B, 200, 304A-B) during the eye blink, by producing, at a dominant-eye optical element, an optical power that is different from a predefined dominant-eye optical power corresponding to the dominant eye, whilst producing, at a non-dominant-eye optical element, a predefined non-dominant-eye optical power corresponding to the non-dominant eye.

7. The optical apparatus (100, 300) of any of the preceding claims, wherein the at least one processor (108, 308) is configured to:
determine an average frequency at which previous eye blinks of the user have occurred;
predict a time duration after which a next eye blink is expected to occur, based on the average frequency and time elapsed since a last eye blink of the user; and
when the predicted time duration is longer than a predefined time threshold, drive the controlling means (106, 306A-B) to change the at least one of the one or more optical parameters of the active optical element (104A-B, 200, 304A-B) without a delay.

8. A method comprising:
detecting a trigger for changing at least one of one or more optical parameters of an active optical element (104A-B, 200, 304A-B);
processing eye-tracking data, collected by an eye-tracking means (102, 302), to detect a beginning of an eye blink of a user; and
driving controlling means (106, 306A-B) for changing the at least one of the one or more optical parameters of the active optical element during the eye blink.

9. The method of claim 8, wherein the one or more optical parameters of the active optical element (104A-B, 200, 304A-B) comprise at least one of: at least one optical power to be produced, a position of at least one region (202, 204) of the active optical element in which the at least one optical power is to be produced, a shape of the at least one region, an optical centre of the at least one region, a shape of the active optical element, a profile of the active optical element, a transparency of at least a portion (206A-D) of the active optical element, a blur of at least a portion of the active optical element, a colour of the active optical element, whether an astigmatism correction mode of the active optical element is switched on or off, whether a prismatic correction mode of the active optical element is switched on or off.

10. The method of claim 8 or 9, wherein the step of detecting the trigger comprises:
determining an optical depth at which the user is fixating;
selecting a predefined optical power, from amongst a plurality of predefined optical powers, based on the optical depth at which the user is fixating; and
detecting a difference between the predefined optical power and a current optical power being produced by the active optical element (104A-B, 200, 304A-B),
wherein the method further comprises when said difference is smaller than a predefined difference, driving the controlling means (106, 306A-B) to change the at least one of the one or more optical parameters of the active optical element during the eye blink, by performing a transition from the current optical power to the predefined optical power.

11. The method of claim 10, wherein the method further comprises driving the controlling means (106, 306A-B) to perform the transition from the current optical power to the predefined optical power without a delay, when said difference is not smaller than the predefined difference.

12. The method of any of claims 8-11, wherein the step of detecting the trigger comprises:
determining a gaze direction of a given eye of the user, whilst determining an optical depth at which the user is fixating;
selecting a predefined optical power, from amongst a plurality of predefined optical powers, based on the optical depth at which the user is fixating;
selecting a region (202, 204) of the active optical element (104A-B, 200, 304A-B) in which the predefined optical power is to be produced, based on the gaze direction; and
detecting an overlap of less than a predefined percent between the selected region and a current region of the active optical element in which a current optical power is being produced;
wherein the method further comprises when the overlap between the selected region and the current region is less than the predefined percent, driving the controlling means (106, 306A-B) to change the at least one of the one or more optical parameters of the active optical element without any delay, by producing the predefined optical power in the selected region.

13. The method of any of claims 8-12, wherein the step of detecting the trigger comprises:
determining a gaze direction of a dominant eye of the user and a gaze direction of a non-dominant eye of the user;
detecting when a given criteria is satisfied, wherein the given criteria is satisfied when at least one of the following is true:
(i) the gaze direction of the dominant eye and the gaze direction of the non-dominant eye has not converged for at least a predefined time period,
(ii) the gaze direction of the dominant eye and the gaze direction of the non-dominant eye has not converged within a predefined error margin from each other; and
wherein the method further comprises when the given criteria is satisfied, driving the controlling means (106, 306A-B) to change the at least one of the one or more optical parameters of the active optical element (104A-B, 200, 304A-B) during the eye blink, by producing, at a dominant-eye optical element, an optical power that is different from a predefined dominant-eye optical power corresponding to the dominant eye, whilst producing, at a non-dominant-eye optical element, a predefined non-dominant-eye optical power corresponding to the non-dominant eye.

14. The method of any of claims 8-13, further comprising:
determining an average frequency at which previous eye blinks of the user have occurred;
predicting a time duration after which a next eye blink is expected to occur, based on the average frequency and time elapsed since a last eye blink of the user; and
when the predicted time duration is longer than a predefined time threshold, driving the controlling means (106, 306A-B) to change the at least one of the one or more optical parameters of the active optical element (104A-B, 200, 304A-B) without a delay.
